# EUROPEAN PATENT APPLICATION

(11) **EP 4 297 238 A1**
(43) Date of publication of application: **27.12.2023**
(21) Application number: 23180230.7
(22) Date of filing: 20.06.2023
(51) Int. Cl.: H02J 7/02, B60L 53/14, B60L 53/31, B60L 53/51, B60L 53/52, B60L 53/53, H02M 1/42, B60L 53/302

(54) **BIDIRECTIONAL CHARGING DEVICE, SYSTEM AND VEHICLE COMPRISING SAID DEVICE**

(30) Priority: 22.06.2022 ES 202230553
(71) Applicant: Closebattery Logistics SL, 28027 Madrid (ES)
(72) Inventor: AGUADO SÁNCHEZ, José Antonio, 28027 Madrid (ES); SUÁREZ FERNÁNDEZ-MIRANDA, Pablo, 28027 Madrid (ES); SANTOS BERGASA, Borja Alejandro, 28027 Madrid (ES)
(74) Representative: TRBL Intellectual Property

(57) **Abstract**

The present invention relates to a compact-sized bidirectional charging device (100), particularly aimed at charging electric vehicles (4) under different AC or DC voltage modes. More specifically, the invention relates to a bidirectional charging device (100) comprising: an AC input (1), connectable to a power supply grid (2); an AC output (3) connectable to an electric vehicle (4); an AC/DC converter (5) connected to the AC input (1) and to the AC output (2); and a DC bidirectional connection point (6), connected to the AC/DC converter (5). The invention also relates to a system comprising a plurality of said devices (100) connected in parallel, and to a vehicle with bidirectional charging comprising at least said device (100) or said system housed or arranged on-board in the mentioned vehicle.

## Description

### FIELD OF THE INVENTION

The present invention is comprised in the energy sector, with main application in power electronics and, more specifically, in the sector of devices for supplying energy to electric vehicles or other electric systems, by means of an electrical energy mobile storage and delivery station configured as a microgrid, equipped with variable-typology inputs and outputs, under alternating or direct current.

### BACKGROUND OF THE INVENTION

One of the major limitations in the access to clean electrical energy (that is, noncontaminating electrical energy) is the difficulty in being able to make it available to whomever may need it, when and where they need it, and without incurring high costs. This is because, unlike electrical energy sources coming from contaminating sources, clean energy depends on the existence of a grid for suitable distribution. In turn, access to this energy is conditioned by the maximum power this grid can supply.

To alleviate this problem, in the past few decades a wide variety of microgrid architectures has been developed, providing bidirectional electrical generation systems which allows the distribution of electricity from suppliers to consumers, using digital technologies and promoting the integration of the generation sources of a renewable origin, for the purpose of saving energy, reducing costs, and increasing the reliability of the implemented grids. The elements found in a microgrid are typically distributed generation systems, energy storage systems, systems for managing charges, and systems for monitoring and controlling the power flux. Several examples of such microgrid architectures are disclosed in Wang, Shengdong, et al., "Multifunction capability of SiC bidirectional portable chargers for electric vehicles", IEEE Journal of Emerging and Selected Topics in Power Electronics, 2021, Vol. 9(5), 6184-6195.

The use of microgrids makes it possible to provide specific local solutions for the accumulation and supply of electrical energy (for example, renewable energy generation plants of solar or wind origin, charging points for electric vehicles, buildings or complexes that require autonomous and independent supply from the general power grid for security reasons, etc.), thereby adapting to the specific needs of the environment in which they are installed. However, these architectures lack, like the general power grid, the ability to be moved or taken from one place to another quickly and easily, performing accumulation or supply functions in different locations with flexibility and autonomy, under different requirements of power supplied or received. Traditional microgrids are, therefore, very costly and large solutions.

Therefore, there is a need in this technical field to provide transportable and flexible electrical energy generation and accumulation devices that can be used as a service. Said devices must be suitably aimed at the specific demand of their users in contexts such as the charging or discharging of electric vehicles and charging stations under different voltage modalities, as well as the accumulation of energy of solar or wind origin or the accumulation or supply of electrical energy from/to the general power grid, among other applications, thus improving the performance of other prior art microgrids in terms of the speed of reaction to this demand.

The present invention is aimed at meeting said need, by means of a novel device, system and vehicle specially configured to perform charging and discharging tasks under different voltage modes, both DC and AC, in an environmentally and economically sustainable manner, and which can operate not only permanently connected, but also disconnected from the general power grid, operating autonomously. In this way, the invention allows, among other capabilities, the saving and storage of the demand tariff and power peaks, and can also be used in combination with non-green generators, such as diesel generators or other generator sets.

The invention therefore allows working as an independent energy source or can be connected to other units to increase its power and capacity, in a scalable and clean manner. The invention is also transportable on all types of roads, including rural roads. Its weight (preferably less than 800 kg) and dimensions (preferably less than 1 m high) allow it to be loaded into a van-type vehicle, which provides much greater mobility than other known microgrids. The invention also allows communication with energy management applications (EMS), by means of the use of standard protocols and applications, as well as with other systems that integrate recharging and consumption data of various connected devices.

### DESCRIPTION OF THE INVENTION

As described above, a first object of the invention relates to a compact-sized bidirectional microgrid-type charging device, especially aimed, but without limitation to other applications, at the charging of electric vehicles under different voltage modes. Said device is based on any of the claims herein and preferably comprises:
- an alternating current (AC) input, connectable to a power supply grid;
- an AC output connectable to an electric vehicle;
- an alternating current to direct current (AC/DC) converter, connected to the AC input and to the AC output; and
- a direct current (DC) bidirectional connection point, connected to the AC/DC converter.

As a result of this specific combination of inputs, outputs and connections to the AC/DC converter, the device of the invention preferably allows meeting at least a three-fold purpose: i) receiving a power supply from an external grid (such as the general power grid, for example); ii) providing a power supply under a desired AC modality, the same as or different from that received from the external grid; and iii) providing or receiving a power supply as/from a DC source, respectively. In this way, the device not only allows receiving a power supply from multiple sources, such as an AC power grid, a DC battery, or an external renewable energy source such as a solar source, etc., but rather it also allows providing said supply in AC or DC form, as required. Likewise and advantageously, the supply, delivery, and connection architecture thereof allows combining multiple devices in parallel, in a power scalable manner. This furthermore allows reducing the size of the AC/DC converter, such that said converter is readily transportable to the location where it is to be used. In this sense, the AC/DC converter has a rated power of the order of 25-75 kW and, preferably, substantially of 50 kW, which allows implementing the essential functionalities thereof in a final compact-sized device which can be housed in a small-sized transport vehicle, such that the device preferably has a maximum weight of less than 800 kg and/or a total volume of the order of 0.5-2.5 m³. These characteristics represent a considerable improvement over the prior art, as there is no product on the market similar to the one described herein sharing the same purpose.

In a preferred embodiment of the invention, the AC input of the device is a three-phase (for example, 400 V) or single-phase (for example, 230 V) input and has a grid frequency of 50-60 Hz ± 5 Hz. This allows receiving a power supply from a general AC grid so that it can later be utilised to provide at least a part of said supply in the AC output, with or without modification of the type of current of the output with respect to the current of the input.

In another preferred embodiment of the invention, the AC output of the device can be configured in current source and voltage source mode and, preferably, is of the type that can be selected from three-phase (typically, with a voltage of 400 V and a maximum phase current of 72 A, with a power of 50 kW) and single-phase (typically, with a voltage of 230 V and a maximum phase current of 45 A, with a power of 10.3 kW). This allows providing, for example, charging functions to electric vehicles under the mentioned types of single-phase and three-phase current, for example by means of an AC "Mode 3" charging standard, corresponding to a semi-rapid charging mode similar to the one available in wall box-type chargers.

In another preferred embodiment of the invention, the AC/DC bidirectional converter is preferably configured with an inverting electronic architecture based on a plurality of transistors, preferably metal-oxide-semiconductor field-effect transistors, or MOSFETs (e.g., based on silicon carbide, or SiC). Said transistors are preferably configured in branches of MOSFET pairs connected to the AC input and to the AC output by means of corresponding wires. Likewise, said AC connections with the converter are preferably performed through one or more LCL grid filters (inducer-capacitor inducer), with adjustable power factor (by reactive compensation) and preferably with a switching frequency substantially equal to or greater than 20 kHz.

Moreover, the DC connection point of the converter, which can be used both in input mode and in output mode, preferably has a rated power of the order of 25-75 kW and, preferably, substantially of 50 kW. Additionally, the maximum DC input/output voltage is substantially equal to or less than 800 V (with optimal voltage ranges of 400-600 V), with a maximum input/output current of substantially 125 A. The DC output capacity allows, in direct connection, performing the charging of an electric vehicle, for example, in DC "Mode 4", for example by means of charging formats such as CCS Combo, CHAdeMO, etc. Likewise, the DC input capacity allows, in direct connection, receiving a power supply from sources based on this type of current, such as for example those coming from photovoltaic panel arrays as well as from others based on solar energy, etc. Said DC input power supply can be used, as a result of the AC/DC converter, to be converted to AC output, which can be used, for example, to charge an electric vehicle in Mode 3, be delivered to the general power grid, etc. For the variation of the different AC or DC input or output operating modes, the device is preferably configured with corresponding integrated selectors. This also represents a substantial improvement over known charging devices.

In another preferred embodiment of the invention, the DC bidirectional connection point of the device is connected, in its DC input/output branches, to at least one direct current to direct current (DC/DC) bidirectional converter, intended for modifying the voltage of said input/output to/from the AC/DC converter, such that its value is adapted to different applications, such as the reception of power supply, the direct charging of an electric vehicle, the charging of one or more on-board rechargeable batteries in the device, etc. Preferably, the DC/DC converter has a rated power of the order of 25-75 kW and, preferably, substantially of 50 kW.

In a preferred embodiment of the invention, the on-board rechargeable batteries in the device can be configured under any accumulation technology which is preferably comprised within the overall optimal limits of weight (below 800 kg) and/or volume (between 0.5-2.5 m³) of the device. More preferably, said batteries have a capacity comprised between 40-60 kWh, and even more preferably of substantially 50 kWh. Likewise, their preferred rated voltage is in the range of 300-420 V_{DC}, with a more preferred value of substantially 340 V_{DC}, maximum charging current of substantially 50 A, and maximum discharging current of substantially 175 A. The batteries may also comprise short-circuit protection means, inverse connection, charging and/or over-discharging control.

Moreover, the DC/DC converter of the device is preferably configured with an electronic architecture of a DC primary circuit and a DC secondary circuit, connected by a resonant circuit, preferably a transformer-type resonant circuit. More preferably, said primary circuit and secondary circuit comprise, like the AC/DC converter, a plurality of transistors, preferably MOSFET-type transistors (for example, based on SiC). Said transistors are more preferably configured in branches of MOSFET pairs connected to the DC inputs/outputs by means of corresponding wires. Likewise, the DC secondary circuit is preferably connected to a DC filter.

In another preferred embodiment of the invention, the AC/DC converter, the DC/DC converter or any of the other elements of the device is equipped with thermal dissipation or cooling means, for example by means of forced ventilation. Preferably, the optimal operative temperature range of the device will be comprised between substantially -25° and 60°C, under a humidity value comprised between 0 and 95% without condensation. Moreover, for electrical protection the device is preferably equipped with circuit breakers, differential switches, surge protectors, etc.

In another preferred embodiment of the invention, the device comprises a monitoring module connected to the AC input/output, to the DC input/output, to the AC/DC converter, to the DC/DC converter, and/or to the on-board batteries, said module being equipped with sensors adapted for measuring the voltage, current, power, and/or temperature values of said elements. In other preferred embodiments of the invention, said monitoring module can be connected to one or more display means such as, for example, monitors, LCD control panels, touch panels configured with one or more graphic interfaces, light signalling means (for example, by means of LEDs), etc.

In another preferred embodiment of the invention, the device comprises a communications module for the sending and reception of information between the different electronic components of the AC/DC converter, of the DC/DC converter, and/or of the on-board batteries, as well as of any external input or output elements connected to the device. Said communications module can be based on any known protocol, such as RS485, GPRS, Wi-Fi, Ethernet, etc.

A second object of the invention relates to a system comprising a plurality of devices according to any of the embodiments described herein, wherein said devices are electrically connected in parallel to obtain increased power in a scalable manner.

A third object of the invention relates to a vehicle comprising a device or a system according to any of the embodiments described herein, wherein said device or system is housed or arranged on-board in said vehicle.

Finally, throughout the present document, the expression "substantially" will be understood as identical to or comprised in a margin of variation of ±15%.

### DESCRIPTION OF THE DRAWINGS

Figure 1 shows a general diagram of the device of the invention, in a preferred embodiment thereof.
Figure 2 shows an electronic design diagram of the AC/DC converter of the invention in a preferred embodiment thereof.
Figure 3 shows by way of illustration a possible embodiment of the AC/DC converter shown in Figure 2 for a preferred embodiment of the invention.
Figure 4 shows an electronic design diagram of the DC/DC converter of the invention in a preferred embodiment thereof.
Figure 5 shows by way of illustration a possible embodiment of the DC/DC converter shown in Figure 4 for a preferred embodiment of the invention.
Figure 6 schematically shows a bidirectional charging converter system based on a connection in parallel of a plurality of devices according to the invention in a preferred embodiment thereof.

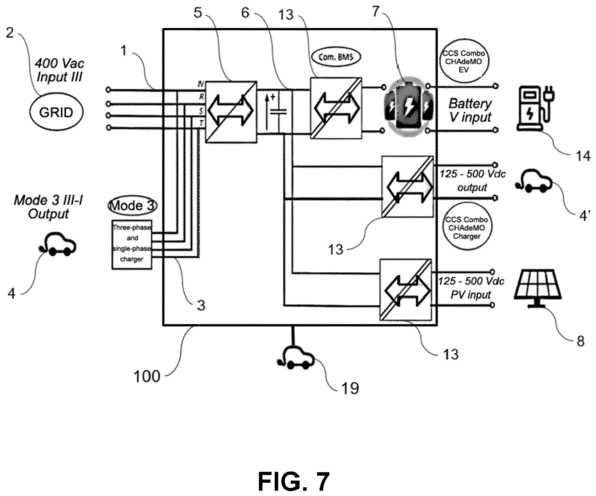

Figure 7 schematically shows a vehicle equipped with a bidirectional charging converter device according to the invention, in a preferred embodiment thereof.

The embodiments shown in the mentioned figures therefore relate to examples that are representative of the invention, but which do not limit in any case the general interpretation derived from the claims incorporated herein nor, therefore, the scope of protection thereof.

### Reference numbers used in the drawings:

(1) AC input.
(2) Power supply grid.
(3) AC output.
(4, 4') Electric vehicle.
(5) AC/DC converter.
(6) DC bidirectional connection point.
(7) On-board rechargeable battery.
(8) DC renewable electrical energy source.
(9) Field-effect transistors.
(10) Branches of pairs of transistors.
(11) Electrical connection wires.
(12) LCL grid filter of the AC/DC converter.
(13) DC/DC converter.
(14) External battery charging or discharging point.
(15) Primary circuit of the DC/DC converter.
(16) Secondary circuit of the DC/DC converter.
(17) Resonant circuit, transformer.
(18) Grid filter of the DC/DC converter.
(19) Vehicle equipped with bidirectional charging device/system.
(100) Bidirectional charging device.
(100') Bidirectional charging system.

### DETAILED DESCRIPTION OF A PREFERRED EMBODIMENT OF THE INVENTION

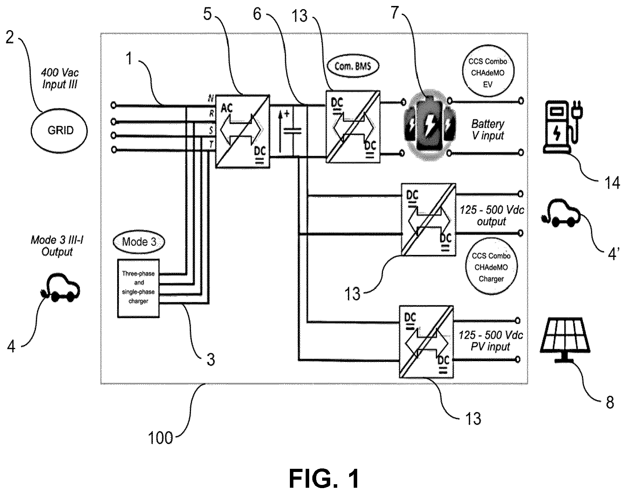

As described in the preceding sections, a first object of the present invention relates to a bidirectional charging converter device (100) comprising, as depicted in Figure 1:
- an AC input (1), connectable to a power supply grid (2);
- an AC output (3) connectable to an electric vehicle (4);
- an AC/DC converter (5) connected to the AC input (1) and to the AC output (2); and
- a DC bidirectional connection point (6), connected to the AC/DC converter (5), wherein said connection point (6) is connected, for example, to an on-board rechargeable battery (7) in the device (100), to an electric vehicle (4'), and/or to an external renewable energy source (8), such as a solar source, etc.

Preferably, the AC/DC converter (5) has a rated power comprised between 25-75 kW and, more preferably, substantially being 50 kW. The device (100) furthermore preferably has a maximum weight of less than 800 kg and/or a total volume of the order of 0.5-2.5 m³.

In a preferred embodiment of the invention, the AC input (1) of the device (100) is a three-phase (for example, of 400 V) or single-phase (for example, of 230 V) input and has a grid frequency of 50-60 Hz ± 5 Hz. This allows receiving a power supply from the general AC grid (2) so that it can later be utilised providing at least a part of said supply in the AC output (3) with or without modification of the type of current of said output (3) with respect to the current of the input (1).

In another preferred embodiment of the invention, the AC output (3) of the device (100) can be configured in current source and voltage source mode and, preferably, is of the type that can be selected from three-phase (typically, with voltage of 400 V and a maximum phase current of 72 A, with a power of 50 kW) and single-phase (typically, with a voltage of 230 V and a maximum phase current of 45 A, with a power of 10.3 kW). More preferably, the AC output (3) is configured by means of an AC "Mode 3" charging standard for an electric vehicle (4).

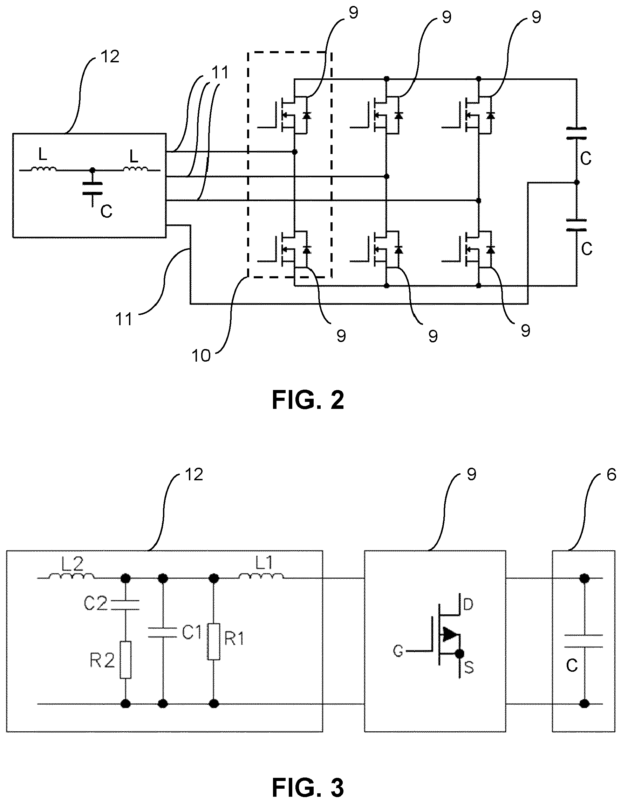

In another preferred embodiment of the invention, the AC/DC bidirectional converter (5) is preferably configured with an inverting electronic architecture based on a plurality of field-effect transistors (9), preferably metal-oxide-semiconductor field-effect transistors, or MOSFETs (e.g., based on silicon carbide, or SiC), as depicted in Figure 2 (which also depicts various electrical inducers and capacitors as L and C, respectively). Said transistors (9) are preferably configured in branches (10) of MOSFET pairs connected to the AC input (1) and to the AC output (3) by means of corresponding electrical connection wires (11). Likewise, the AC connections with the converter (5) are preferably performed through one or more LCL grid filters (12) (inducer-capacitor inducer), with adjustable power factor (by reactive compensation) and preferably with a switching frequency substantially equal to or greater than 20 kHz. A preferred embodiment of said LCL filter (12) is depicted in Figure 3, wherein said filter (12) comprises two inducers (L1, L2), two capacitors (C1 and C2), and two resistors R1, R2. The figure also depicts the "gate" (G), "drain" (D) and "source" (S) terminals of the MOSFET transistor (9) and a DC output with a capacitor (C).

Moreover, the DC connection point (6) of the AC/DC converter (5), which can be used both in input and output modality, preferably has a rated power of the order of 25-75 kW and, preferably, substantially of 50 kW. Additionally, the maximum DC input/output voltage is substantially equal to or less than 800 V (with voltage optimal ranges of 400-600 V), and with a maximum input/output current of substantially 125 A. The DC output capacity allows, in direct connection, performing the charging of an electric vehicle (4'), for example, in DC "Mode 4", for example by means of charging formats such as CCS Combo, CHAdeMO, etc. Likewise, the DC input capacity allows, in direct connection, receiving a power supply from renewable energy sources (8) based on direct current, such as for example those coming from photovoltaic panel arrays as well as from others based on solar energy, etc. Said DC input power supply can be used, as a result of the AC/DC converter (5), to be converted to AC output (3) which can be used, for example, to charge an electric vehicle (4) in Mode 3 (as has been described previously), be delivered to the general power grid (2), etc. For the variation of the different AC or DC input or output operating modes, the device (100) of the invention is preferably configured with corresponding integrated selectors.

In another preferred embodiment of the invention, the DC bidirectional connection point (6) of the device (100) is connected, in its DC input/output branches, to at least one DC/DC bidirectional converter (13), configured to modify the DC voltage of said input/output to/from the AC/DC converter (5), such that its value is adapted to different applications, such as the reception of power supply from renewable sources (8), the direct charging of an electric vehicle (4'), or the charging of one or more on-board rechargeable batteries (7) in the device (100), wherein said batteries can likewise be connected to an external charging or discharging point (14). Preferably, the DC/DC converter (13) has a rated power of the order of 25-75 kW and, preferably, substantially of 50 kW.

In a preferred embodiment of the invention, the on-board rechargeable batteries (7) of the device (100) can be configured under any accumulation technology which is preferably comprised within the overall optimal limits of weight (below 800 kg) and/or volume (between 0.5-2.5 m³) of the device (100). In this sense, said batteries (7) more preferably have a capacity comprised between 40-60 kWh and, even more preferably of substantially 50 kWh. Likewise, their preferred rated voltage is in the range of 300-420 V_{DC}, with a more preferred value of substantially 340 V_{DC}, maximum charging current of substantially 50 A, and maximum discharging current of substantially 175 A. The batteries (7) may also comprise short-circuit protection means, inverse connection, charging and/or over-discharging control.

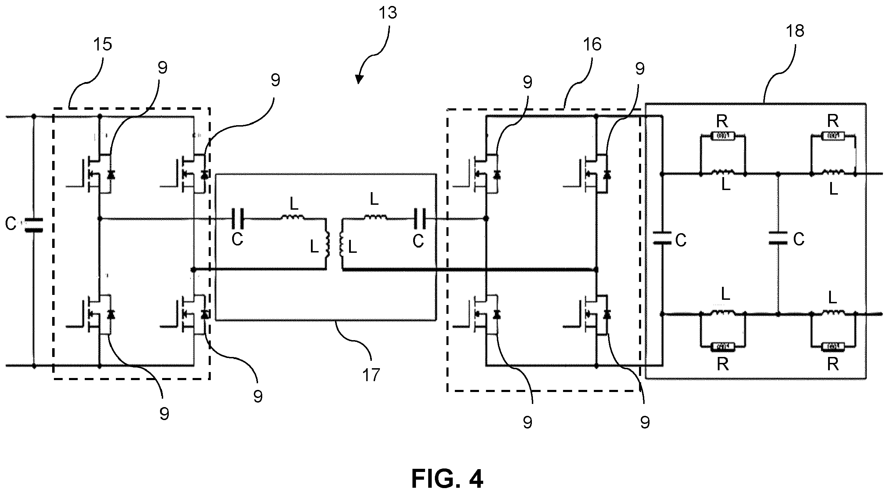

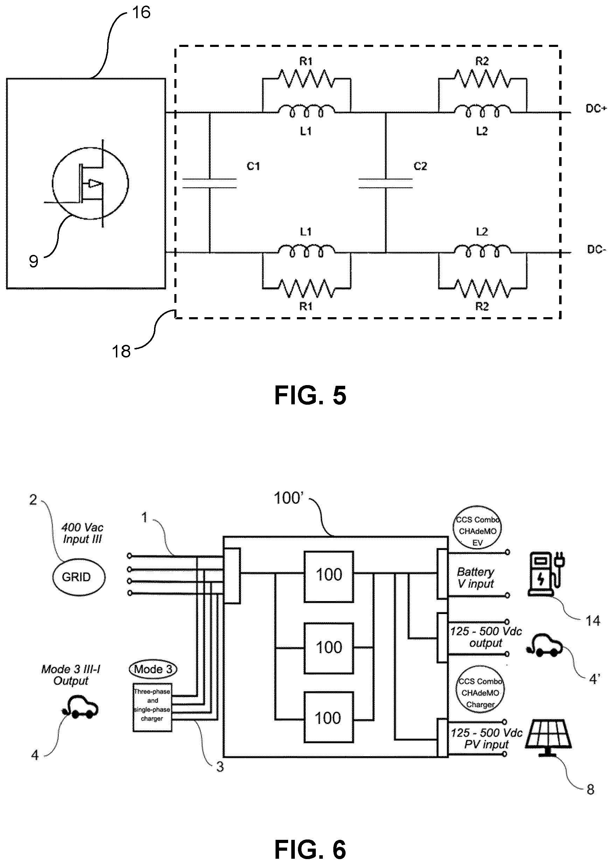

Moreover, according to one embodiment of the invention illustrated by Figure 4 herein, the DC/DC converter (13) of the device (100) is preferably configured with an electronic architecture of a DC primary circuit (15) and a DC secondary circuit (16), connected through a resonant circuit (17), preferably a transformer-type resonant circuit. Like the AC/DC converter (5), said primary circuit (15) and secondary circuit (16) comprise a plurality of transistors (9), preferably MOSFET-type transistors (for example, based on SiC). Said transistors (9) are more preferably configured in branches (10) of MOSFET pairs connected to one or more DC input/output points (6) by means of corresponding wires (11). Likewise, the DC secondary circuit (16) is preferably connected to a DC filter (18). A preferred embodiment of said DC filter (18) based on a parallel arrangement of pairs of inducers (L1, L2), pairs of resistors (R1, R2), and capacitors (C1, C2) connected to a DC secondary circuit (16) based on MOSFET transistors (9) is depicted in Figure 5.

In another preferred embodiment of the invention, the AC/DC converter (5), the DC/DC converter (13) or any of the other elements of the device (100) is equipped with thermal dissipation or cooling means, for example by means of forced ventilation. Preferably, said dissipation or cooling means maintain the optimal operative temperature range of the device (100) between substantially -25° and 60° C, under a humidity value comprised between 0 and 95% without condensation. Moreover, for electrical protection the device (100) is preferably equipped with circuit breakers, differential switches, surge protectors, etc. (not shown in the figures).

In another preferred embodiment of the invention, the device (100) comprises a monitoring module connected to the AC input (1) or AC output (3), to the DC input/output points (6), to the AC/DC converter (5), to the DC/DC converter (13), and/or to the on-board batteries (7), said monitoring module being equipped with sensors adapted for measuring the voltage, current, power, and/or temperature values of said elements. In other preferred embodiments of the invention, said monitoring module can be connected to one or more display means such as, for example, monitors, LCD control panels, touch panels configured with one or more graphic interfaces (for example interfaces web), light signalling means (for example, by means of LEDs), etc.

In another preferred embodiment of the invention, the device (100) comprises a communications module for the sending and reception of information between the different electronic components of the AC/DC converter (5), of the DC/DC converter (13), and/or of the on-board batteries (7), as well as of any external input or output elements connected to the device (100). Said communications module can be based on any known communication protocol, such as RS485, GPRS, Wi-Fi, Ethernet, etc., either by means of a wired connection, a wireless connection, a mobile connection, etc.

A second object of the invention illustrated in Figure 6 also relates to a bidirectional charging converter system (100') comprising a plurality of devices (100) according to any of the embodiments described herein, wherein said devices are connected in parallel, such that the power thereof is scalable by means of said connection.

Lastly, a third object of the invention relates to a vehicle (19) comprising at least one device (100) or a system according to any of the embodiments described herein, wherein said device (100) or system (100') is housed or arranged on-board in said vehicle (19). A readily transportable solution which can provide the charging or discharging functionalities of the invention anywhere and rapidly is thereby obtained. In a preferred embodiment of the invention in which the device (100) or the system (100') has a total weight of less than 800 kg, and a total volume comprised between 0.5-2.5 m³, said vehicle can be, for example, a van, panel truck, car, or small-sized truck, which is suitable for providing the mentioned charging or discharging functionalities in both rural and urban settings.

## Claims

1. A bidirectional charging device (100) comprising:
- an AC input (1), connectable to a power supply grid (2);
- an AC output (3), connectable to an electric vehicle (4);
- an AC/DC converter (5), connected to the AC input (1) and to the AC output (2);
- a DC bidirectional connection point (6), connected to the AC/DC converter (5);
- an on-board rechargeable battery (7) connected to the DC bidirectional connection point (6).

2. The device (100) according to the preceding claim, wherein the DC bidirectional connection point (6) is further connected to an electric vehicle (4'), and/or to an external solar and/or wind renewable energy source (8).

3. The device (100) according to any of the preceding claims, wherein the AC/DC converter (5) has a rated power comprised between 25-75 kW.

4. The device (100) according to any of the preceding claims, wherein said device (100) has a maximum weight of less than 800 kg and/or a total volume comprised between 0.5-2.5 m³.

5. The device (100) according to any of the preceding claims, wherein the AC input (1) of the device (100) is a three-phase or single-phase input and has a grid frequency of 50-60 Hz ± 5 Hz.

6. The device (100) according to any of the preceding claims, wherein the AC output (3):
- is adapted to be configured in current source and voltage source mode, and is of the type that can be selected from three-phase and single-phase; and/or
- is configured by means of an AC "Mode 3" charging standard for an electric vehicle (4).

7. The device (100) according to any of the preceding claims, wherein the AC/DC converter (5) is configured with an inverting electronic architecture based on a plurality of field-effect transistors (9),
and wherein the transistors (9) are configured in branches (10) of pairs of transistors (9) connected to the AC input (1) and to the AC output (3) by means of corresponding electrical connection wires (11), and wherein said AC connections with the converter (5) are carried out through one or more LCL grid filters (12) with adjustable power factor and with a switching frequency substantially equal to or greater than 20 kHz.

8. The device (100) according to any of the preceding claims, wherein the DC connection point (6) of the AC/DC converter (5):
- has a rated power of the order of 25-75 kW, with a maximum DC input/output voltage substantially equal to or less than 700 V, and with a maximum input/output current of substantially 125 A; and/or
- is adapted to carry out charging functions for an electric vehicle (4') in DC Mode 4 by means of a CCS Combo and/or CHAdeMO charging format.

9. The device (100) according to any of the preceding claims wherein the DC bidirectional connection point (6) and the on-board rechargeable battery (7) are connected through a DC/DC bidirectional converter (13) configured to modify the DC voltage of the input/output to/from the AC/DC converter (5).

10. The device according to the preceding claim, wherein the DC/DC converter (13) has a rated power of 25-75 kW and, preferably, substantially of 50 kW.

11. The device (100) according to any of the claims 9-10, wherein the DC/DC converter (13) is configured with an electronic architecture of a DC primary circuit (15) and a DC secondary circuit (16), connected by a transformer-type resonant circuit (17), and wherein said primary circuit (15) and secondary circuit (16) comprise a plurality of field-effect transistors (9) configured in branches (10) of pairs of transistors (9) connected to one or more DC input/output points (6), by means of corresponding wires (11).

12. The device (100) according to the preceding claim, wherein the secondary circuit (16) of DC is connected to a DC grid filter (18).

13. The device (100) according to any of the preceding claims, comprising:
a monitoring module connected to one or more of the following elements of said device (100):
- an AC input (1) or output (3);
- a DC input/output point (6),
- an AC/DC converter (5);
- a DC/DC converter (13) connected to the AC/DC converter (5);
- an on-board rechargeable battery (7) connected to the DC bidirectional connection point (6);
said monitoring module being equipped with sensors adapted for measuring the voltage, current, power, and/or temperature values of said elements; and/or
a communications module for the sending and reception of information between one or more electronic components of the AC/DC converter (5), of a DC/DC converter (13) connected to the AC/DC converter (5), and/or of one or more on-board batteries (7) in the device (100).

14. A bidirectional charging system (100) comprising a plurality of devices (100) according to any of the preceding claims, wherein said devices (100) are electrically connected in parallel.

15. Vehicle (19) with bidirectional charging comprising at least one device (100) according to any of the claims 1-13, or a system according to the preceding claim, wherein said device (100) or system (100') is housed or arranged on-board in said vehicle (19).
